# EUROPÄISCHE PATENTSCHRIFT

(11) **EP 3 676 511 B1**
(45) Veröffentlichungstag und Bekanntmachung des Hinweises auf die Patenterteilung: **11.08.2021**
(21) Anmeldenummer: 18781961.0
(22) Anmeldetag: 14.08.2018
(51) Int. Cl.: F16H 3/093, F16H 3/097, F16H 57/021

(54) **INLINE-GETRIEBE MIT ZWEI ZWISCHENWELLEN**
INLINE TRANSMISSION WITH TWO INTERMEDIATE SHAFTS
TRANSMISSION EN LIGNE À DEUX ARBRES DE RENVOI

(30) Priorität: 28.08.2017 DE 102017119687; 05.07.2018 DE 102018116328
(43) Veröffentlichungstag der Anmeldung: 08.07.2020
(73) Patentinhaber: Getrag Ford Transmissions GmbH, 50735 Köln (DE)
(72) Erfinder: CHAZOTTE, Jean-Pierre, 53639 Königswinter (DE)
(74) Vertreter: Wagner Albiger & Partner Patentanwälte mbB
(86) Internationale Anmeldenummer: PCT/EP2018/072062
(87) Internationale Veröffentlichungsnummer: WO 2019/042766

(56) Entgegenhaltungen:
- DE-A1-102013 218 519
- DE-B- 1 059 777
- JP-A- H0 193 651

## Beschreibung

Die Erfindung betrifft ein Schaltgetriebe mit mehreren schaltbaren Gängen für ein Kraftfahrzeug, wobei das Schaltgetriebe eine Eingangswelle, eine koaxial zur Eingangswelle angeordnete Ausgangswelle sowie eine erste Zwischenwelle und eine zweite Zwischenwelle umfasst, die parallel und beabstandet zu der Eingangswelle angeordnet sind.

Ein derartiges Getriebe, das auch als Inline-Getriebe bezeichnet wird, ist beispielsweise aus der DE 10 2011 052 440 A1 bekannt. Das dort offenbarte Inline-Getriebe umfasst eine antriebsseitige Zahnradpaarung, welche ein Antriebszahnrad und ein erstes Zwischenrad aufweist. Das Antriebszahnrad ist auf der Eingangswelle drehfest angeordnet und kämmt mit dem ersten Zwischenrad, das auf der ersten Zwischenwelle drehfest angeordnet ist. Über die antriebsseitige Zahnradpaarung wird ein Antriebsdrehmoment, welches von einem Motor erzeugt wird und über eine Kupplung in die Eingangswelle geleitet wird, auf die erste Zwischenwelle weitergeleitet. Von der ersten Zwischenwelle lässt sich das Antriebsdrehmonent über mehrere Zahnradpaarungen auf die Ausgangswelle schalten. Die Zahnradpaarungen weisen dabei jeweils ein Festrad und ein schaltbares Losrad ein, wobei jedes Losrad sich über eine Gangschaltkupplung drehfest mit einer der Getriebewellen verbinden lässt. Jedem Gang des Schaltgetriebes kann somit eine Gangschaltkupplung zugeordnet werden. Ist die Gangschaltkupplung geschlossen bzw. befindet sie sich in einer Schaltposition, ist der betreffende Gang eingelegt.

Durch die antriebsseitige Zahnradpaarung ist eine konstante Übersetzung zwischen Eingangswelle und erster Zwischenwelle vorgegeben, die die Gesamtübersetzung eines jeden Gangs mitbestimmt. Diese konstante Übersetzung wird im Folgenden Antriebskonstante genannt. Die Antriebskonstante bei einem Wert deutlich größer 1 hat einen positiven Effekt auf die wirkenden Verzahnungskräfte im Getriebe und den Wirkungsgrad des Schaltgetriebes, weil sich die Zwischenwelle langsam dreht. Eine große Antriebskonstante ist grundsätzlich für die Realisierung der unteren Gänge mit großen Gesamtübersetzungen hilfreich.

Weist die antriebsseitige Zahnradpaarung jedoch eine zu große Antriebskonstante auf, kann insbesondere die Realisierung der Gesamtübersetzung eines höchsten Gangs (also der Gang mit dem kleinsten Verhältnis von Drehzahl der Eingangswelle zu Drehzahl der Ausgangswelle) schwierig werden. Möglicherweise lässt sich die erforderliche Gesamtübersetzung des höchsten Gangs des Schaltgetriebes bei gegebenen Randbedingungen (Achsabstände, Packaging) nicht mehr erreichen, weil die Antriebskonstante einfach zu groß ist. Wird ein kleinerer Wert für die Antriebskonstante gewählt, so ergeben sich mehr Freiheitsräume bei der Auslegung der höheren Gänge, jedoch zu Lasten der unteren Gänge. Im Schaltgetriebe der DE 10 2011 052 440 wird diese Problematik mit einer zweiten Zwischenwelle gelöst. Dadurch ist es möglich, trotz einer vergleichsweise kleinen Antriebskonstanten, welche die einzelnen Gesamtübersetzungen aller Gänge des Schaltgetriebes mitbestimmt, genügend große Übersetzungen für einen Rückwärtsgang und einen Kriechgang zu realisieren.

Zudem sind aus dem Stand der Technik auch Schaltgetriebe mit einer Abtriebskonstanten bekannt. Dabei weist das jeweilige Schaltgetriebe eine abtriebsseitige Zahnradpaarung mit einem auf der Ausgangswelle drehfest angeordneten Abtriebszahnrad auf. Große Abtriebskonstanten führen zu einer vergleichsweise schnell drehenden Zwischenwelle mit einer besseren Schaltbarkeit der Gänge. Die Gesamtübersetzungen der einzelnen Gänge hängen nun jeweils von der Abtriebskonstanten ab, so dass sich auch hier grundsätzlich die Schwierigkeit ergibt, ein einfach aufgebautes Schaltgetriebe mit mehreren Gängen bereit zu stellen, das eine möglichst großen Bereich von unterschiedlichen Gesamtübersetzungen abdeckt.

Die DE 10 2013 218519 A1 offenbart nach Auffassung der Prüfungsabteilung des europäischen Patentamts ein Schaltgetriebe, welches unter den Wortlaut des Oberbegriffs des Anspruchs 1 fällt.

Der Erfindung liegt daher die Aufgabe zu Grunde, ein Schaltgetriebe für ein Kraftfahrzeug bereit zu stellen, das einfach und kompakt aufgebaut ist und einen großen Bereich an unterschiedlichen Gangübersetzungen aufweist.

Die der Erfindung zu Grunde liegende Aufgabe wird mit dem Schaltgetriebe gemäß Anspruch 1 gelöst. Ausführungsbeispiele der Erfindung können den Unteransprüchen zu Anspruch 1 entnommen werden.

Erfindungsgemäß ist vorgesehen, dass das Schaltgetriebe sowohl eine antriebsseitige Zahnradpaarung als auch eine abtriebsseitige Zahnradpaarung aufweist. Die antriebsseitige Zahnradpaarung weist dabei das auf der Eingangswelle drehfest angeordnete Antriebszahnrad und das auf der ersten Zwischenwelle drehfest angeordnete erste Zwischenrad auf, während die abtriebsseitige Zahnradpaarung ein auf der zweiten Zwischenwelle drehfest angeordnetes zweites Zwischenrad und das auf der Ausgangswelle drehfest angeordnete Antriebszahnrad aufweist. Im Zugbetrieb des Getriebes, wenn also Antriebsdrehmoment von dem Motor über die Eingangswelle in das Schaltgetriebe zum Antrieb des Kraftfahrzeugs eingeleitet wird, wird im eingelegten Zustand wenigstens eines der schaltbaren Gänge das Antriebsdrehmoment von der Eingangswelle zur Ausgangswelle über die antriebsseitige Zahnradpaarung übertragen, während über die abtriebsseitige Zahnradpaarung dabei kein Antriebsdrehmoment übertragen wird. Zudem wird jeweils im eingelegten Zustand von wenigstens drei anderen schaltbaren Gängen Antriebsdrehmoment von der Eingangswelle zur Ausgangswelle über die abtriebsseitige Zahnradpaarung übertragen, während dabei über die antriebsseitige Zahnradpaarung jeweils kein Antriebsdrehmoment übertragen wird. Somit weist das erfindungsgemäße Schaltgetriebe wenigstens drei Gänge auf, deren Gesamtübersetzung (Verhältnis der Drehzahl der Eingangswelle zu Drehzahl der Ausgangswelle bei eingelegtem Gang) von der Antriebskonstante unabhängig ist. Gleichzeitig gibt es mindestens einen Gang im Schaltgetriebe, dessen Gesamtübersetzung von der Abtriebskonstante unabhängig ist. Durch diese Unabhängigkeiten des einen schaltbaren Gangs und der anderen drei schaltbaren Gänge lässt sich ein einfach aufgebautes

Schaltgetriebe bereitstellen, dass eine große Übersetzungsspreizung (Bereich zwischen der größten Gesamtübersetzung und der kleinsten Gesamtübersetzung) aufweist.

In einem Ausführungsbeispiel wird im eingelegten Zustand eines Kriechgangs das Antriebsdrehmoment über die antriebsseitige Zahnradpaarung übertragen. Der Kriechgang stellt dabei im Schaltgetriebe den Vorwärtsgang dar, durch den zwischen Eingangswelle und Ausgangswelle die größte Übersetzung realisiert werden kann. Bei eingelegtem Kriechgang ist die abtriebsseitige Zahnradpaarung vorzugsweise lastfrei geschaltet.

Alternativ oder zusätzlich zu dem Kriechgang kann im eingelegten Zustand eines Rückwärtsgangs Antriebsdrehmoment über die antriebsseitige Zahnradpaarung übertragen. Die abtriebsseitige Zahnradpaarung kann hier ebenfalls lastfrei geschaltet sein.

Im eingelegten Zustand eines zweiten Vorwärtsgangs, dessen Übersetzung kleiner ist als das Übersetzungsverhältnis des Kriechgangs kann das Antriebsdrehmoment über die abtriebsseitige Zahnradpaarung übertragen werden, während dann erfindungsgemäß die antriebsseitige Zahnradpaarung kein Antriebsmoment überträgt. Somit ist ein Schaltgetriebe offenbart, bei dem in Abhängigkeit des eingelegten Gangs das Antriebsdrehmoment entweder über die antriebsseitige Zahnradpaarung oder die abtriebsseitige Zahnradpaarung geleitet wird, ohne dass dabei die jeweils andere Zahnradpaarung Antriebsdrehmoment überträgt.

Im eingelegten Zustand eines weiteren Gangs des Schaltgetriebes kann die erste Zwischenwelle mit der zweiten Zwischenwelle drehfest verbunden sein. Dabei kann das Antriebsdrehmoment sowohl über die antriebsseitige Zahnradpaarung als auch über die abtriebsseitige Zahnradpaarung geleitet werden. Vorzugsweise stellt sich die gleichzeitige Nutzung der antriebseitigen Zahnradpaarung und der abtriebsseitigen Zahnradpaarung zur Übertragung von Antriebsdrehmoment nur in einem einzigen Gang des Schaltgetriebes dar. Dadurch lässt sich ein besonders einfach aufgebautes Schaltgetriebe realisieren. Für diesen weiteren Gang, der vorzugsweise einen ersten Vorwärtsgang des Schaltgetriebes darstellt, entspricht die Gesamtübersetzung dem Produkt aus Antriebskonstante und Abtriebskonstante. Alternativ kann dieser weitere Gang auch ein weiterer Rückwärtsgang sein.

Ein bevorzugtes Ausführungsbeispiel lässt sich anhand folgender Tabelle beschreiben. Ein x bedeutet, dass die Übersetzung eines Gangs (Vorwärtsgang/Rückwärtsgang) von der entsprechenden Konstanten abhängt. Beispielsweise hängt die Übersetzung des vierten Vorwärtsgangs hier weder von der Antriebskonstanten noch von der Abtriebskonstanten ab. Vorzugsweise sind zwei weitere Vorwärtsgänge vorgesehen (fünfter und sechster Vorwärtsgang). Die Antriebskonstante nimmt vorzugsweise Werte zwischen 2 und 4 an. Die Antriebskonstante kann dem Zwei- bis Dreifachen der Abtriebskonstanten entsprechen.

**Tabelle: Abhängigkeit von An-/Abtriebskonstante für ein Ausführungsbeispiel:**

| | Antriebskonstante | Abtriebskonstante |
|---|---|---|
| Rückwärtsgang | x | - |
| Kriechgang | x | - |
| Erster Vorwärtsgang | x | x |
| Zweiter Vorwärtsgang | - | x |
| Dritter Vorwärtsgang | - | x |
| Vierter Vorwärtsgang | - | - |
| Weitere Vorwärtsgänge | - | x |

In einem Ausführungsbeispiel weist das Schaltgetriebe keine weitere Eingangswelle auf. Es handelt sich somit nicht um ein Doppelkupplungsgetriebe, das zwei Eingangswellen aufweist. Bei dieser Ausführung würde das Schaltgetriebe nur eine einzige Eingangswelle aufweisen. Auch handelt es sich vorzugsweise nicht um ein das Antriebsdrehmoment verzweigendes Getriebe, bei dem gleichzeitig in axialer Richtung der ersten Zwischenwelle und in axialer Richtung der zweiten Zwischenwelle (teilweise) Antriebsdrehmoment übertragen wird.

Die erste Zwischenwelle und die zweite Zwischenwelle sind koaxial angeordnet sein. Erfindungsgemäß sind die erste Zwischenwelle als Innenwelle und die zweite Zwischenwelle als Hohlwelle ausgebildet.

An einem Ende der ersten Zwischenwelle kann das erste Zwischenrad angeordnet sein. Vorzugsweise handelt es sich bei diesem Ende um ein antriebsseitiges Ende der ersten Zwischenwelle, das dem Antrieb bzw. dem Motor des Kraftfahrzeugs zugewandt ist.

An einem anderen Ende der ersten Zwischenwelle kann ein Losrad oder Festrad für den Kriechgang angeordnet sein. An dem anderen Ende der ersten Zwischenwelle kann alternativ ein Festrad bzw. ein Losrad für den Rückwärtsgang angeordnet sein. Die Anordnung eines Zahnrads wie beispielsweise Festrad oder Losrad an einem der beiden Enden der ersten Zwischenwelle bedeutet, dass es an diesem Ende kein weiteres Zahnrad des Schaltgetriebes befindet, das zur Übertragung von Antriebsdrehmoment dient und axial weniger beabstandet von dem betreffenden stirnseitigen Ende der Zwischenwelle angeordnet ist.

Auf der zweiten Zwischenwelle kann eine erste Doppelgangschaltkupplung angeordnet sein, durch die in einer ersten Schaltstellung/Schaltposition sich das erste Zwischenrad und in einer zweiten Schaltstellung sich ein auf der zweiten Zwischenwelle angeordnetes Losrad drehfest mit der zweiten Zwischenwelle drehfest verbinden lässt.

Vorzugsweise soll in der ersten Schaltstellung der ersten Doppelgangschaltkupplung der erste Vorwärtsgang des Schaltgetriebes eingelegt sein. Das auf der zweiten Zwischenwelle angeordnete Losrad, welches sich mit besagter Doppelgangschaltkupplung drehfest mit der zweiten Zwischenwelle verbinden lässt, kann dem zweiten Vorwärtsgang des Schaltgetriebes zugeordnet sein.

In einem Ausführungsbeispiel ist eine Zwischenplatte vorgesehen, die zur Abstützung der Eingangswelle und/oder Ausgangswelle sowie der ersten Zwischenwelle und/oder der zweiten Zwischenwelle dient. Die Zwischenplatte kann zwischen der abtriebsseitigen Zahnradpaarung und dem Festrad oder dem Losrad des Rückwärtsgangs angeordnet sein. Die Zwischenplatte kann eine erste Zwischenlagerung aufnehmen, an der sich die Eingangswelle und die Ausgangswelle abstützen. Die Abstützung kann dabei so erfolgen, dass ein axialer Hohlabschnitt der Ausgangswelle in radialer Richtung zwischen der Zwischenlagerung und der Eingangswelle angeordnet ist. Die Abstützung der Eingangswelle an der ersten Zwischenlagerung erfolgt dann über den axialen Hohlabschnitt der Ausgangswelle, der ein Ende der Eingangswelle radial umgreifen kann.

Die Zwischenplatte kann eine zweite Zwischenlagerung aufnehmen, um die erste Zwischenwelle und/oder die zweite Zwischenwelle abzustützen. Vorzugsweise dient die zweite Zwischenlagerung zur Abstützung der ersten, als Innenwelle ausgebildeten Zwischenwelle.

In axialer Richtung kann zwischen der ersten Doppelgangschaltkupplung und der abtriebsseitigen Zahnradpaarung eine zweite Doppelgangschaltkupplung angeordnet sein, um auf der Eingangswelle oder der zweiten Zwischenwelle angeordnete Losräder von weiteren Vorwärtsgängen drehfest mit der Eingangswelle bzw. der zweiten Zwischenwelle zu verbinden. Vorzugsweise handelt es sich bei diesen weiteren Vorwärtsgängen um einen dritten Vorwärtsgang und einen vierten Vorwärtsgang. Wenn sich die Losräder des dritten Vorwärtsgangs und des vierten Vorwärtsgangs auf der Eingangswelle befinden, ist die zweite Doppelgangschaltkupplung ebenfalls auf der Eingangswelle angeordnet.

In einem Ausführungsbeispiel dient die zweite Doppelgangschaltkupplung dazu, ein Gangrad eines Direktgangs (direkter Vorwärtsgang) mit der Eingangswelle drehfest zu verbinden, wobei bei eingelegtem Direktgang die Eingangswelle und die Ausgangswelle mit gleicher Drehzahl umlaufen. Das Gangrad des Direktgangs kann als Festrad auf der Ausgangswelle ausgebildet sein, wobei dieses Festrad bezogen auf die Eingangswelle die Eigenschaften eines auf der Eingangswelle sitzendes Losrads aufweist.

Ist der Direktgang eingelegt, so wird weder über die antriebsseitige Zahnradpaarung noch über die abtriebsseitige Zahnradpaarung Antriebsdrehmoment übertragen. Das Vorsehen des Direktgangs macht deutlich, dass das Schaltgetriebe wenigstens einen schaltbaren Gang aufweisen kann, dessen Übersetzung sowohl von der Antriebskonstanten als auch von der Abtriebskonstanten unabhängig ist. In einem bevorzugten Ausführungsbeispiel ist es aber lediglich nur ein einziger schaltbarer Gang, der diese besagte Unabhängigkeit aufweist.

Das Losrad des vierten Vorwärtsgangs kann zugleich das Abtriebsrad sein, das Teil der abtriebsseitigen Zahnradpaarung ist und drehfest mit der Ausgangswelle verbunden ist. Bei eingelegtem Direktgang verbindet die zweite Doppelgangsschaltkupplung die Eingangswelle drehfest mit dem drehfest auf der Ausgangswelle sitzenden Abtriebsrad. Das Abtriebsrad weist somit eine Doppelfunktion auf.

In axialer Richtung kann zwischen der ersten Doppelgangschaltkupplung und der zweiten Doppelgangschaltkupplung eine weitere Gangschaltkupplung vorzugsweise in Form einer dritten Doppelgangsschaltkupplung vorgesehen sein, um auf der Eingangswelle oder der zweiten Zwischenwelle angeordnete Losräder von weiteren Vorwärtsgängen drehfest mit der Eingangswelle bzw. der zweiten Zwischenwelle zu verbinden. Vorzugsweise sind die zweite Doppelgangschaltkupplung und die dritte Doppelgangschaltkupplung beide auf der Eingangswelle angeordnet. Es ist aber auch denkbar, dass sie beide auf der zweiten Zwischenwelle sitzen oder alternativ auf verschiedenen Wellen verteilt sind. Die weiteren Vorwärtsgänge, die sich mithilfe der dritten Doppelgangschaltkupplung einlegen lassen, können ein fünfter und sechster Vorwärtsgang sein. Wird zu Grunde gelegt, dass der vierte Vorwärtsgang als Direktgang ausgebildet ist, können somit mit der zweiten Doppelgangschaltkupplung und der dritten Doppelgangschaltkupplung Vorwärtsgänge mit einem Übersetzungsverhältnis ungleich 1 realisiert werden, nämlich zwei Vorwärtsgänge, die ein Übersetzungsverhältnis kleiner 1 haben (fünfter und sechster Vorwärtsgang) und ein Vorwärtsgang (dritter Vorwärtsgang), der ein Übersetzungsverhältnis größer 1 hat. Es hat sich gezeigt, dass sich durch die die Realisierung des vierten Vorwärtsgangs (Übersetzung gleich 1) als Direktgang eine besonders gute Abstufung der Gänge erzielen lässt, wobei zu berücksichtigen ist, dass durch die oben beschriebene Doppelfunktion des Abtriebsrads eine Abhängigkeit zwischen den Übersetzungen der Vorwärtsgänge gegeben ist.

Somit können die Losräder der folgenden Vorwärtsgänge, von der antriebsseitigen Zahnradpaarung aus gesehen, in folgender Reihenfolge aufgereiht sein: zweiter Vorwärtsgang, fünfter Vorwärtsgang, sechster Vorwärtsgang, dritter Vorwärtsgang, vierter Vorwärtsgang.

In einem Ausführungsbeispiel ist eine Gangschaltkupplung vorgesehen, um das Losrad des Rückwärtsgangs mit der Welle zu verbinden, auf der das Losrad angeordnet ist, wobei das Losrad in axialer Richtung zwischen der abtriebsseitigen Zahnradpaarung und der Gangschaltkupplung angeordnet ist. Dies ermöglicht eine einfache Lagerung eines Umkehrrads, welches für die Drehrichtungsumkehr beim Rückwärtsgang notwendig ist, da sich das Umkehrrad in unmittelbarer Nähe zur Zwischenplatte befindet.

Vorzugsweise ist die Gangschaltkupplung als Doppelgangschaltkupplung ausgebildet, die somit auch als vierte Doppelgangschaltkupplung bezeichnet werden kann. Diese vierte Doppelgangschaltkupplung lässt sich zum Einlegen des Kriechgangs einsetzen. Hier wird bevorzugt, dass das Losrad des Rückwärtsgangs axial näher zur abtriebsseitigen Zahnradpaarung angeordnet ist als das Losrad des Kriechgangs. Dies hat den Vorteil, dass das Schaltgetriebe mit dem Kriechgang und den sechs Vorwärtsgängen (was einem 7-Gang-Getriebe entspricht) durch Weglassen des Kriechgangs und durch Austausch der vierten Doppelgangschaltkupplung durch eine einfach wirkende Gangschaltkupplung in einfacher Weise zu einem 6-Gang-Getriebe modifiziert werden kann.

Auch sei darauf hingewiesen, dass anstelle der dritten Doppelgangschaltkupplung eine einfach wirkende Gangschaltkupplung zum Einsatz kommen kann, mit der lediglich nur ein Vorwärtsgang eingelegt werden kann. Diese einfach wirkende Gangschaltkupplung kann in axialer Richtung zwischen erster Doppelgangschaltkupplung und zweiter Gangschaltkupplung liegen. Neben den im obigen Absatz beschriebenen Varianten (7-Gang-Getriebe und 6-Gang-Getriebe) lässt sich somit auch ein 5-Gang-Getriebe realisieren, wobei die unterschiedlichen Varianten eine grundsätzlich gleiche Getriebearchitektur aufweisen.

Anhand der in den Figuren dargestellten Ausführungsbeispiele wird die Erfindung näher erläutert. Es zeigen:
- Figur 1: schematisch den Radsatz eines erfindungsgemäßen Ausführungsbeispiels der Erfindung;
- Figur 2: schematisch einen Radsatz, der nicht erfindungsgemäß ist; und
- Figur 3: schematisch einen weiteren Radsatz, der nicht erfindungsgemäß ist.

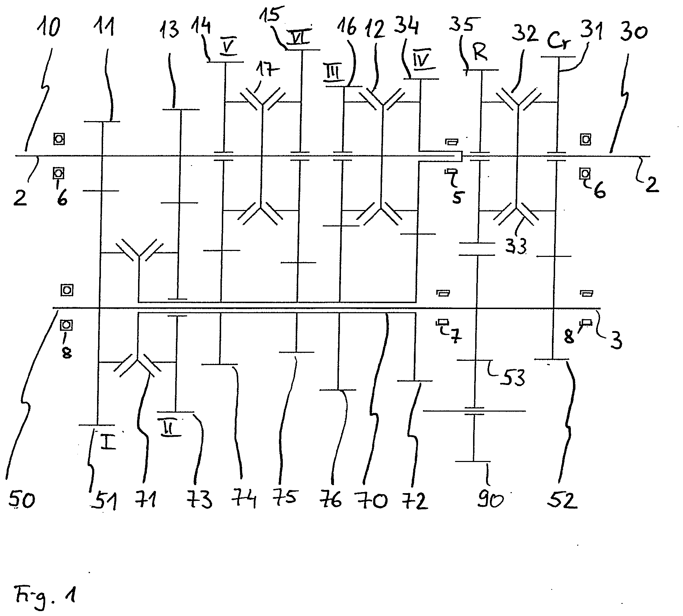

Figur 1 zeigt schematisch ein erfindungsgemäßes Schaltgetriebe für ein Kraftfahrzeug. Das Schaltgetriebe weist eine Eingangswelle 10 und eine Ausgangswelle 30 auf, die koaxial zur Eingangswelle 10 angeordnet ist. Die beiden Eingangswellen 10, 30 sind um eine Drehachse 2 drehbar gelagert. Des Weiteren weist das Schaltgetriebe eine erste Zwischenwelle oder Vorgelegewelle 50 und eine zweite Zwischenwelle 70 auf, wobei die erste Zwischenwelle 50 als Innenwelle und die zweite Zwischenwelle 70 als dazu koaxial angeordnete Hohlwelle angeordnet ist. Der Achsabstand zwischen der Achse 2 und einer Achse 3, um die die Zwischenwellen 50, 70 drehbar gelagert sind, kann beispielsweise 80 bis 100 mm betragen. Das Schaltgetriebe kann vorzugsweise längs zu Fahrtrichtung des Kraftfahrzeugs eingebaut sein. In diesem Fall sind die Fahrtrichtung und die Achsen 2, 3 parallel zueinander.

Auf der Eingangswelle 10 ist ein Antriebszahnrad 11 drehfest angeordnet. Das Antriebszahnrad 11 steht im kämmenden Eingriff mit einem ersten Zwischenrad 51, welches drehfest auf der ersten Zwischenwelle 50 sitzt. Die Zahnräder 11, 51 bilden eine antriebsseitige Zahnradpaarung, durch die eine konstante Übersetzung (Antriebskonstante) zwischen der Eingangswelle 10 und der ersten Zwischenwelle 50 vorgegeben ist. Der Durchmesser des ersten Zwischenrads 51 ist in etwa 3 bis 3,5 mal so groß wie der Durchmesser des Antriebszahnrads 11. Dadurch ergibt sich für die Antriebskonstante ein entsprechender Wert von 3 bis 3,5. Zu bemerken ist, dass das Antriebszahnrad 11 ausschließlich mit dem ersten Zwischenrad 11 im kämmenden Eingriff steht. Weitere Zahnräder in der Ebene der Zahnräder 11, 51 existieren nicht. Durch den kämmenden Eingriff ist das erste Zwischenrad drehfest mit der Eingangswelle verbunden. Eine drehfeste Verbindung mit zwei Bauteilen erfordert daher nicht, dass sich die Bauteile mit gleicher Drehzahl um eine gleiche Achse drehen.

Das erste Zwischenrad 51 ist an einem antriebsseitigen Ende der ersten Zwischenwelle 50 angeordnet. An dem gegenüberliegenden Ende der ersten Zwischenwelle 50 ist ein Festrad 52 angeordnet, das mit einem auf der Ausgangswelle 30 sitzenden Losrad 31 kämmt. Über eine koaxial zur Ausgangswelle 30 angeordnete Doppelgangschaltkupplung 32, welche hier auch als vierte Doppelgangschaltkupplung bezeichnet wird, lässt sich das Losrad 31 drehfest mit der Ausgangswelle 30 verbinden. Eine mit 33 bezeichnete Schiebemuffe der vierten Doppelgangschaltkupplung 32 muss dabei eine in der Darstellung der Figur 1 rechte Schaltposition einnehmen. In dieser Schaltposition befindet sich ein Kriechgang Cr des Schaltgetriebes im eingelegten Zustand. Ein in die Eingangswelle 2 eingespeistes Antriebsdrehmoment verläuft in einem Zugbetrieb des Kraftfahrzeugs bei eingelegtem Kriechgang Cr somit über das Antriebszahnrad 11 und das damit kämmende erste Zwischenrad 51 auf die erste Zwischenwelle 50, durch die das Drehmoment über die Zahnräder 52, 31 zur Ausgangswelle 30 gelangt. Eine Übersetzung des Kriechgangs Cr setzt sich dabei aus der Antriebskonstante der antriebsseitigen Zahnradpaarung und der Übersetzung zusammen, die sich aus dem Eingriff des Festrads 52 auf der ersten Zwischenwelle 50 und dem Losrad 31 auf der Ausgangswelle 30 ergibt. Da der Durchmesser des Losrads 31 in etwa 1,5 bis 2 mal so groß ist wie der Durchmesser des Festrads 52, ergibt sich für den Kriechgang eine (Gesamt-) Übersetzung von 4,5 bis 7.

Durch eine Doppelgangschaltkupplung 71 (auch erste Doppelgangschaltkupplung genannt) auf der zweiten Zwischenwelle 70 lässt sich das erste Zwischenrad 51 drehfest mit der zweiten Zwischenwelle 70 verbinden. Der Aufbau der ersten Doppelgangschaltkupplung 71 entspricht im Wesentlichen dem Aufbau der vierten Doppelgangschaltkupplung 32 mit der Schiebemuffe 33. Vereinfacht wird im Folgenden von einer ersten/zweiten oder rechten/linken Schaltposition einer der Doppelgangschaltkupplungen ausgegangen, gleichwohl sich die Schaltposition eigentlich auf die betreffende Schiebemuffe bezieht.

Bei einer ersten oder linken Schaltposition der ersten Doppelgangschaltkupplung 71, also bei einer drehfesten Verbindung zwischen Zwischenrad 51 und der zweiten Zwischenwelle 70, ist ein erster Vorwärtsgang I des Schaltgetriebes eingelegt. Das Antriebsdrehmoment wird bei eingelegtem ersten Vorwärtsgang I von der Eingangswelle 10 somit auf die zweite Zwischenwelle 70 übertragen. Über ein als Festrad ausgebildetes zweites Zwischenrad 72 auf der zweiten Zwischenwelle 70 und ein damit kämmendes, als Festrad ausgebildeten Abtriebsrad 34 auf der Ausgangswelle 30 gelangt das Antriebsdrehmoment von der Zwischenwelle 70 auf die Ausgangswelle 30. Die von den Festrädern 72, 34 gebildete Zahnradpaarung kann als abtriebsseitige Zahnradpaarung bezeichnet werden, die wie die antriebsseitige Zahnradpaarung mit den Festrädern 11, 51 eine konstante Übersetzung (abtriebsseitige Konstante) aufweist. Die abtriebsseitige Konstante beträgt hier 1,2 bis 1,4. Die (Gesamt-) Übersetzung des ersten Vorwärtsgangs I entspricht somit dem Produkt der Antriebskonstante und der Abtriebskonstanten. Es ergibt sich somit eine Übersetzung des zweiten Vorwärtsgangs II von 3,6 bis 4,9.

Zur Realisierung eines Rückwärtsgangs R ist ein Umkehrrad 90 vorgesehen, das mit einem Festrad 53 auf der ersten Zwischenwelle 50 kämmt. Das Umkehrrad 90 wiederum kämmt mit einem Losrad 35 auf der Ausgangswelle 30. Ähnlich wie beim Kriechgang Cr verläuft bei eingelegtem Rückwärtsgang R der Drehmomentfluss von der Eingangswelle 10 über die die erste Zwischenwelle 50 auf die Ausgangswelle 30. Die zweite Zwischenwelle 70 ist dabei lastfrei geschaltet. Dies bedeutet, dass bei eingelegtem Kriechgang Cr und bei eingelegtem Rückwärtsgang R jeweils kein Antriebsdrehmoment über die zweite Zwischenwelle 70 geleitet wird, gleichwohl sie sich aufgrund der abtriebsseitigen Zahnradpaarung mitdreht.

In axialer Richtung ist die zweite Zwischenwelle 70 von dem ersten Zwischenrad 51 und dem Festrad 53 des Rückwärtsgang R eingeschlossen. Die zweite Zwischenwelle 70 ist daher kürzer als die erste Zwischenwelle 50

Ein vierter Vorwärtsgang IV ist eingelegt, wenn mittels einer auf der Eingangswelle 10 sitzender Doppelgangschaltkupplung 12 (zweite Doppelgangschaltkupplung) die Eingangswelle 10 drehfest mit dem Abtriebsrad 34 bzw. mit der Ausgangswelle 30 verbunden ist. Die Übersetzung bei eingelegtem vierten Vorwärtsgang IV beträgt dabei 1. Die zweite Doppelgangschaltkupplung 12 befindet sich dann in einer rechten oder ersten Schaltposition. Der vierte Vorwärtsgang IV kann auch als Direktgang bezeichnet werden.

Auf der Eingangswelle 10 sind des Weiteren ein Festrad 13 und drei Losräder 14, 15, 16 angeordnet. Die Losräder 14, 15 lassen sich mit einer dazwischen angeordneten Doppelgangschaltkupplung 17 (dritte Gangschaltkupplung) drehfest mit der Eingangswelle 10 verbinden. Die zweite Doppelgangschaltkupplung 12 dient neben der drehfesten Verbindung des Abtriebsrad 34 mit der Eingangswelle 10 auch zur drehfesten Verbindung des Losrads 16 mit der Eingangswelle 10. Die zweite Doppelgangschaltkupplung 12 wird dazu in eine linke Schaltposition bewegt.

Das Festrad 13 kämmt mit einem Losrad 73 auf der zweiten Zwischenwelle 70. Befindet sich die dritte Doppelgangschaltkupplung 71 in einer rechten Schaltposition, ist das Losrad 73 drehfest mit der Zwischenwelle verbunden. Dadurch lässt sich ein zweiter Vorwärtsgang II realisieren. Das Antriebsdrehmoment verläuft somit über die Eingangswelle und die Zahnräder 13, 73 auf die zweite Zwischenwelle. Schließlich gelangt das Antriebsdrehmoment über die abtriebsseitige Zahnradpaarung mit den Zahnrädern 72, 34 auf die Ausgangswelle 30.

Die Losräder 14, 15, 16 der Eingangswelle 10 kämmen mit Festrädern 74, 75 und 76, welche auf der zweiten Zwischenwelle 70 sitzen. Durch entsprechende Schaltpositionen der Doppelgangschaltkupplungen 17, 12 lassen sich ein dritter Vorwärtsgang III, ein fünfter Vorwärtsgang V und ein sechster Vorwärtsgang VI realisieren. Der Drehmomentfluss dieser Gänge III, V und VI erfolgt dabei wie beim zweiten Vorwärtsgang II über die abtriebsseitige Zahnradpaarung. Die (Gesamt-) Übersetzung des sechsten Vorwärtsgangs VI hängt von der Abtriebskonstanten ab und liegt hier in einem Bereich zwischen 0,6 und 0,7. Ein bestimmungsgemäßer Fluss des Antriebsmoments von Eingangswelle 10 zu Ausgangswelle 30 zum Antrieb des Fahrzeugs ohne Verspannung des Getriebes ist immer nur dann möglich, wenn nur ein einziger Gang eingelegt ist.

Abgesehen von der zusätzlichen Welle für das Umkehrrad 90 zur Richtungsumkehr beim Rückwärtsgang R weist das Schaltgetriebe keine weiteren Wellen auf. Das Schaltgetriebe umfasst lediglich die zueinander koaxialen Wellen 10, 30 und die Zwischenwellen 50, 70, wobei Letztgenannte ebenfalls zueinander koaxial angeordnet sind. Dadurch lässt sich ein besonders einfach aufgebautes und kompaktes Inline-Getriebe mit sechs Vorwärtsgängen mit einem zusätzlichen Kriechgang realisieren. Das Inline-Getriebe kann auch als 7-Gang-Getriebe bezeichnet werden, wobei dann der Kriechgang als erster Vorwärtsgang gilt. Durch das Weglassen des Kriechgangs Cr lässt sich das vorliegende Getriebe in ein gewöhnliches 6-Gang-Getriebe ohne Kriechgang umwandeln, um beispielsweise axiale Baulänge zu reduzieren.

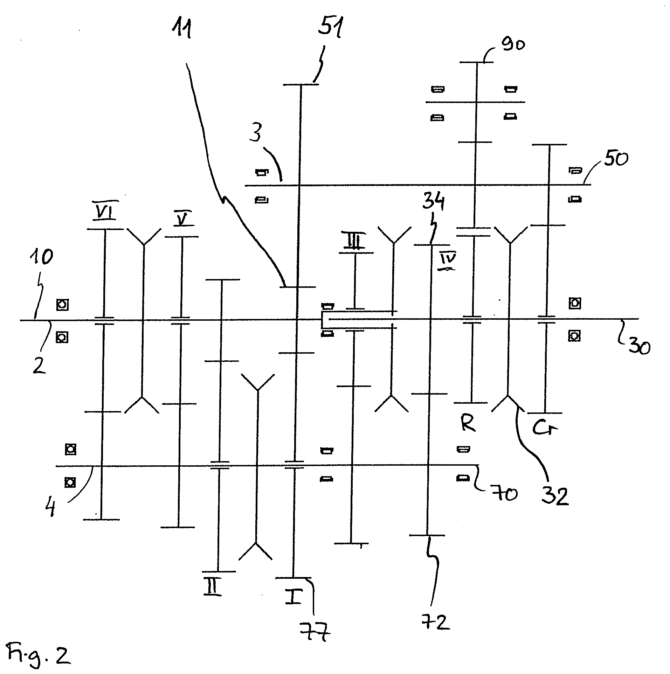

In Figur 1 ist eine erste Zwischenlagerung 5 angedeutet, durch die die Eingangswelle 10 und die Ausgangswelle 30 zwischen zwei Hauptlagern 6 der Wellen 10, 30 zusätzlich abgestützt werden. Die erste Zwischenlagerung 5 stützt sich wiederum an einer nicht dargestellten Zwischenplatte im Schaltgetriebe ab, die sich in axialer Nähe zur abtriebsseitigen Zahnradpaarung mit den Zahnrädern 72, 34 befindet und sich im Wesentlichen senkrecht zu der Achse 2 erstreckt. Des Weiteren zeigt Figur 2 eine zweite Zwischenlagerung 7, die sich in axialer Richtung zwischen weiteren Hauptlagern 8 zur Lagerung der Zwischenwellen 50, 70 befindet. Die zweite Zwischenlagerung 7 stützt sich auch an der Zwischenplatte ab bzw. ist in dieser eingearbeitet. Die Zwischenplatte dient zudem dazu, eine Lagerung oder eine Aufnahme für die Lagerung des Umkehrrads 90 bereitzustellen.

Figur 2 zeigt einen Radsatz, der nicht erfindungsgemäß ist. Gleiche oder ähnliche Bauteile zu den Bauteilen des Ausführungsbeispiels der Figur 1 werden mit gleichen Bezugszeichen versehen. Die Eingangswelle 10 trägt auch hier ein Antriebszahnrad 11, das mit dem ersten Zwischenrad 51 der ersten Zwischenwelle 50 im kämmenden Eingriff steht und die Antriebskonstante vorgibt. Wenn der Kriechgang Cr bzw. der Rückwärtsgang R eingelegt ist, verläuft das Antriebsmoment verläuft von der Eingangswelle 10 über die nicht schaltbaren Zahnräder auf die erste Zwischenwelle 50. Von dort aus gelangt bei entsprechender Schaltposition der Gangschaltkupplung 32 das Antriebsdrehmoment auf die Ausgangswelle 30.

Ein wesentlicher Unterschied zu Figur 1 besteht in der Anordnung der Zwischenwellen 50, 70, die hier nicht mehr koaxial, sondern zueinander beabstandet angeordnet sind. Die zweite Zwischenwelle 70 dreht sich um eine zusätzliche Achse 4. Antriebsdrehmoment, welche zur zweiten Zwischenwelle 70 gelangt, wird über die abtriebsseitige Zahnradpaarung mit den Festrädern 72, 34 auf die Ausgangswelle 30 geleitet. Das Schaltgetriebe der Figur 2 weist ebenfalls sechs Vorwärtsgänge I bis VI sowie den Kriechgang Cr auf. Der vierte Vorwärtsgang IV ist auch hier als Direktgang mit einer Übersetzung gleich 1 ausgeführt. Ein weiterer Unterschied besteht darin, dass zur Ausbildung des ersten Vorwärtsgangs I ein gesondertes Losrad 77 vorgesehen ist, dass wie das erste Zwischenrad 51 mit dem Antriebszahnrad 11 kämmt und somit in der gleichen Ebene wie das erste Zwischenrad 51 liegt. Jedoch handelt es sich hier um zwei verschiedene Zahnräder, während im Ausführungsbeispiel der Figur 1 das erste Zwischenrad gleichzeitig die Funktion des Losrads des ersten Vorwärtsgangs I übernimmt.

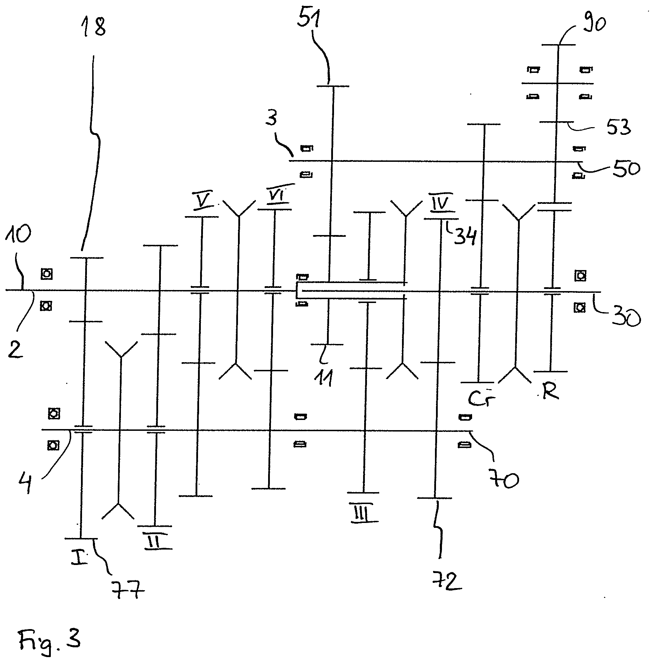

Figur 3 zeigt einen weiteren, nicht-erfindungsgemäßen Radsatz. Bezüglich der Wellen 10, 30, 50 und 70 ähnelt es dem Ausführungsbeispiel der Figur 2. Es unterscheidet sich insbesondere in der axialen Anordnung der Gänge. Beispielsweise liegt nun der Rückwärtsgang R und nicht der Kriechgang Cr am axialen Ende der ersten Zwischenwelle 50. Jedoch hängen die Übersetzungen der Gänge Cr, R weiterhin von der Antriebskonstanten ab (siehe Zahnräder 11, 51). Die Übersetzungen der übrigen Gänge mit Ausnahme des vierten Vorwärtsgang IV (Direktgang) hängen wiederum von der Abtriebskonstanten ab (siehe Zahnräder 72, 34). Ein Unterschied zu Figur 2 besteht darin, dass das Antriebszahnrad 11 auf der Eingangswelle 10 nur mit dem ersten Zwischenrad 51 im kämmenden Eingriff steht. Das Losrad 77 des ersten Vorwärtsgangs I liegt in einer anderen Ebene wie das erste Zwischenrad 51, was ein zusätzliches Festrad 18 auf der Eingangswelle 10 notwendig macht.

### Bezugszeichenliste

- 2: Achse
- 3: Achse
- 4: Achse
- 5: Erste Zwischenlagerung
- 6: Hauptlager
- 7: Zweite Zwischenlagerung
- 8: Hauptlager

- 10: Eingangswelle
- 11: Antriebszahnrad
- 12: Vierte Doppelgangschaltkupplung
- 13: Festrad
- 14: Losrad
- 15: Losrad
- 16: Losrad
- 17: Dritte Doppelgangschaltkupplung
- 18: Festrad

- 30: Ausgangswelle
- 31: Losrad
- 32: Zweite Doppelgangschaltkupplung
- 33: Schiebemuffe
- 34: Gangrad/Festrad

- 50: Erste Zwischenwelle
- 51: Erstes Zwischenrad
- 52: Festrad
- 53: Festrad
- 70: Zweite Zwischenwelle
- 71: Erste Doppelgangschaltkupplung
- 72: Zweites Zwischenrad
- 73: Losrad
- 74: Festrad
- 75: Festrad
- 76: Festrad
- 77: Losrad

- 90: Umkehrrad

## Patentansprüche

1. Schaltgetriebe mit mehreren schaltbaren Gängen für ein Kraftfahrzeug, umfassend:
- eine Eingangswelle (10) und eine Ausgangswelle (30), die koaxial zur Eingangswelle (10) angeordnet ist,
- eine erste Zwischenwelle (50) und eine zweite Zwischenwelle (70), die parallel und beabstandet zu der Eingangswelle (10) angeordnet sind,
- eine antriebsseitige Zahnradpaarung mit einem auf der Eingangswelle (10) drehfest angeordneten Antriebszahnrad (11) und mit einem auf der ersten Zwischenwelle (50) drehfest angeordneten ersten Zwischenrad (51),
- eine abtriebsseitige Zahnradpaarung mit einem auf der zweiten Zwischenwelle (70) drehfest angeordneten zweiten Zwischenrad (72) und mit einem auf der Ausgangswelle (30) drehfest angeordneten Abtriebsrad (34),
wobei im Zugbetrieb des Schaltgetriebes
- im eingelegten Zustand wenigstens eines schaltbaren Gangs Antriebsdrehmoment von der Eingangswelle (10) zur Ausgangswelle (30) über die antriebsseitige Zahnradpaarung übertragen wird, während über die abtriebsseitige Zahnradpaarung dabei kein Antriebsdrehmoment übertragen wird, und
- im jeweils eingelegten Zustand von wenigstens drei anderen schaltbaren Gängen Antriebsdrehmoment von der Eingangswelle (10) zur Ausgangswelle (30) über die abtriebsseitige Zahnradpaarung übertragen wird, während dabei über die antriebsseitige Zahnradpaarung jeweils kein Antriebsdrehmoment übertragen wird, wobei die erste Zwischenwelle (50) und die zweite Zwischenwelle (70) koaxial angeordnet sind, **dadurch gekennzeichnet, dass** die erste Zwischenwelle (50) als Innenwelle und die zweite Zwischenwelle (70) als Hohlwelle ausgebildet sind.

2. Getriebe nach Anspruch 1, **dadurch gekennzeichnet, dass** im eingelegten Zustand eines Kriechgangs Antriebsdrehmoment über die antriebsseitige Zahnradpaarung übertragen wird, wobei der Kriechgang einen Vorwärtsgang darstellt, durch den zwischen Eingangswelle (10) und Ausgangswelle (30) die größte Übersetzung realisiert werden kann.

3. Getriebe nach Anspruch 1 oder 2, **dadurch gekennzeichnet, dass** im eingelegten Zustand eines zweiten Vorwärtsgangs und im eingelegten Zustand wenigstens eines weiteren Vorwärtsgangs Antriebsdrehmoment über die abtriebsseitige Zahnradpaarung übertragen wird.

4. Getriebe nach einem der Ansprüche 1 bis 3, **dadurch gekennzeichnet, dass** im eingelegten Zustand eines Rückwärtsgangs Antriebsdrehmoment über die antriebsseitige Zahnradpaarung übertragen wird.

5. Getriebe nach einem der Ansprüche 1 bis 4, **dadurch gekennzeichnet, dass** im eingelegten Zustand eines weiteren Vorwärtsgangs die erste Zwischenwelle (50) mit der zweiten Zwischenwelle (70) drehfest verbunden sind.

6. Getriebe nach Anspruch 2, **dadurch gekennzeichnet, dass** an einem Ende der ersten Zwischenwelle (50) das erste Zwischenrad (51) und an einem anderen Ende der ersten Zwischenwelle (50) ein Festrad (52) oder ein Losrad des Kriechgangs angeordnet sind.

7. Getriebe nach Anspruch 4, **dadurch gekennzeichnet, dass** an einem Ende der ersten Zwischenwelle (50) das erste Zwischenrad (51) und an einem anderen Ende der ersten Zwischenwelle (50) ein Festrad (53) oder ein Losrad (35) des Rückwärtsgangs angeordnet sind.

8. Getriebe nach einem der Ansprüche 1 bis 7, **dadurch gekennzeichnet, dass** auf der zweiten Zwischenwelle (70) eine erste Doppelgangschaltkupplung (71) angeordnet ist, durch die in einer ersten Schaltstellung sich das erste Zwischenrad (51) und in einer zweiten Schaltstellung sich ein auf der zweiten Zwischenwelle (70) angeordnetes Losrad (73) drehfest mit der zweiten Zwischenwelle (70) drehfest verbinden lässt.

9. Getriebe nach Anspruch 7 oder Anspruch 8, sofern sich letzterer auf Anspruch 7 bezieht, **dadurch gekennzeichnet, dass** eine Zwischenplatte zur Abstützung der Eingangswelle (10) und/oder Ausgangswelle (30) sowie der ersten Zwischenwelle (50) und/oder der zweiten Zwischenwelle (70) vorgesehen ist, wobei die Zwischenplatte zwischen der abtriebsseitigen Zahnradpaarung und dem Festrad (53) bzw. dem Losrad (35) des Rückwärtsgangs angeordnet ist.

10. Getriebe nach Anspruch 7 oder 9, **dadurch gekennzeichnet, dass** eine Gangschaltkupplung vorgesehen ist, um das Losrad (35) des Rückwärtsgangs mit der Welle zu verbinden, auf der das Losrad (35) angeordnet ist, wobei das Losrad (35) in axialer Richtung zwischen der abtriebsseitigen Zahnradpaarung und der Gangschaltkupplung angeordnet ist.

11. Getriebe nach Anspruch 8 oder nach Anspruch 9, sofern sich letzterer auf Anspruch 8 bezieht, oder nach Anspruch 10, sofern sich letzterer auf Anspruch 8 bezieht, **dadurch gekennzeichnet, dass** in axialer Richtung zwischen der ersten Doppelgangschaltkupplung (71) und der abtriebsseitigen Zahnradpaarung eine zweite Doppelgangschaltkupplung (12) angeordnet ist, um auf der Eingangswelle (10) oder der zweiten Zwischenwelle (70) angeordnete Losräder (16) von weiteren Vorwärtsgängen drehfest mit der Eingangswelle bzw. der zweiten Zwischenwelle zu verbinden.

12. Getriebe nach Anspruch 11, **dadurch gekennzeichnet, dass** die zweite Doppelgangschaltkupplung (12) dazu dient, ein Gangrad (34) eines Direktgangs mit der Eingangswelle (10), drehfest zu verbinden, wobei bei eingelegtem Direktgang die Eingangswelle (10) und die Ausgangswelle (30) mit gleicher Drehzahl umlaufen.

13. Getriebe nach Anspruch 12, **dadurch gekennzeichnet, dass** in axialer Richtung zwischen der ersten Doppelgangschaltkupplung (71) und der zweiten Doppelgangschaltkupplung (12) eine weitere Gangschaltkupplung vorgesehen ist, um wenigstens ein auf der Eingangswelle (10) oder der zweiten Zwischenwelle (70) angeordnetes Losrad von wenigstens einem weiteren Vorwärtsgang drehfest mit der Eingangswelle (10) bzw. der zweiten Zwischenwelle (70) zu verbinden.

14. Getriebe nach Anspruch 13, **dadurch gekennzeichnet, dass** die weitere Gangschaltkupplung als eine dritte Doppelgangschaltkupplung (17) ausgebildet ist, um zwei auf der Eingangswelle (10) oder der zweiten Zwischenwelle (70) angeordnete Losräder (14, 15) von zwei weiteren Vorwärtsgängen drehfest mit der Eingangswelle (10) bzw. der zweiten Zwischenwelle (70) zu verbinden.

15. Getriebe nach Anspruch 13 oder 14, **dadurch gekennzeichnet, dass** die zweite Doppelgangschaltkupplung (12) und die weitere Gangschaltkupplung jeweils auf der Eingangswelle (10) angeordnet sind.

## Claims

1. Manual transmission having a plurality of shiftable gears for a motor vehicle, comprising:
- an input shaft (10) and an output shaft (30) which is arranged coaxially to the input shaft (10),
- a first intermediate shaft (50) and a second intermediate shaft (70) which are arranged in parallel to and distanced from the input shaft (10),
- a drive-side gearwheel pair having one drive gearwheel (11) arranged in a rotationally conjoint manner on the input shaft (10) and having one first intermediate gearwheel (51) arranged in a rotationally conjoint manner on the first intermediate shaft (50),
- a drive-side gearwheel pair having one second intermediate gearwheel (72) arranged in a rotationally conjoint manner on the second intermediate shaft (70) and having one drive gearwheel (34) arranged in a rotationally conjoint manner on the output shaft (30),
wherein in the traction mode of the manual transmission
- in the engaged state of at least one shiftable gear, drive torque is transmitted from the input shaft (10) to the output shaft (30) via the drive-side gearwheel pair, while in each case no drive torque is transmitted via the output-side gearwheel pair,
- in the respectively engaged state of at least three other shiftable gears talk moment is transmitted from the input shaft (10) to the output shaft (30) via the output-side gearwheel pair, while in each case no drive torque is transmitted via the drive-side gearwheel pair,
wherein the first intermediate shaft (50) and the second intermediate shaft (70) are arranged coaxially, **characterised in that** the first intermediate shaft (50) is designed as an inner shaft and the second intermediate shaft (70) is designed as a hollow shaft.

2. Transmission according to claim 1, **characterised in that** in the engaged state of a creep mode, drive moment is transmitted via the drive-side gearwheel pair, wherein the creep mode constitutes a forward gear by means of which the greatest translation can be realised between input shaft (10) and output shaft (30).

3. Transmission according to claim 1 or 2, **characterised in that** in the engaged state of a second forward gear and in the engaged state of at least one further forward gear, drive torque is transmitted via the output-side gearwheel pair.

4. Transmission according to any of claims 1 to 3, **characterised in that** in the engaged state of a reverse gear, drive torque is transmitted via the drive-side gearwheel pair.

5. Transmission according to any of claims 1 to 4, **characterised in that** in the engaged state of a further forward gear, the first intermediate shaft (50) are connected in a rotationally conjoint manner with the second intermediate shaft (70).

6. Transmission according to claim 2, **characterised in that** at an end of the first intermediate shaft (50) is arranged the first intermediate gearwheel (51) and at another end of the first intermediate shaft (50) is arranged a fixed gearwheel (52) or an idler gearwheel of the creep mode.

7. Transmission according to claim 4, **characterised in that** at one end of the first intermediate shaft (50) is arranged the first intermediate gearwheel (51) and at another end of the first intermediate shaft (50) is arranged a fixed gearwheel (53) or an idler gearwheel (35) of the reverse gear.

8. Transmission according to any of claims 1 to 7, **characterised in that** on the second intermediate shaft (70) is arranged a first dual gear shift clutch (71), by means of which in a first shift position the first intermediate gearwheel (51) and in a second shift position an idler gearwheel (73) arranged on the second intermediate shaft (70) can be connected in a rotationally conjoint manner in a rotationally conjoint manner with the second intermediate shaft (70).

9. Transmission according to claim 7 or claim 8, insofar as the latter makes reference to claim 7, **characterised in that** an intermediate plate is provided for supporting the input shaft (10) and/or output shaft (30) as well as the first intermediate shaft (50) and/or the second intermediate shaft (70), wherein the intermediate plate is arranged between the output-side gearwheel pair and the fixed gearwheel (53) or the idler gearwheel (35) of the reverse gear.

10. Transmission according to claim 7 or claim 9, **characterised in that** a gear shift clutch is provided in order to connect the idler gearwheel (35) of the reverse gear with the shaft upon which the idler gearwheel (35) is arranged, wherein the idler gearwheel (35) is arranged in axial direction between the output-side gearwheel pair and the gear shift clutch.

11. Transmission according to claim 8 or according to claim 9, insofar as the latter makes reference to claim 8, or according to claim 10, insofar as the latter makes reference to claim 8, **characterised in that** in axial direction between the first dual gear shift clutch (71) and the output-side gearwheel pair is arranged a second dual gear shift clutch (12), in order to connect idler gearwheels (16), arranged on the input shaft (10) or on the second intermediate shaft (70), from further forward gears in a rotationally conjoint manner with the input shaft or the second intermediate shaft.

12. Transmission according to claim 11, **characterised in that** the second dual gear shift clutch (12) serves to connect in a rotationally conjoint manner a gearwheel (34) of a direct gear with the input shaft (10), wherein when the direct gear is engaged the input shaft (10) and the output shaft (30) circulate at the same rotational speed.

13. Transmission according to claim 12, **characterised in that** in axial direction between the first dual gear shift clutch (71) and the second dual gear shift clutch (12) is provided a further gear shift clutch, in order to connect at least one idler gearwheel, arranged on the input shaft (10) or the second intermediate shaft (70), from at least one further forward gear in a rotationally conjoint manner with the input shaft (10) or the second intermediate shaft (70).

14. Transmission according to claim 13, **characterised in that** the further gear shift clutch is designed as a third dual gear shift clutch (17), in order to connect two idler gearwheels (14, 15), arranged on the input shaft (10) or the second intermediate shaft (70), from two further forward gears in a rotationally conjoint manner with the input shaft (10) or the second intermediate shaft (70).

15. Transmission according to claim 13 or 14, **characterised in that** the second dual gear shift clutch (12) and the further gear shift clutch are arranged in each case on the input shaft (10).

## Revendications

1. Boîte de vitesses manuelle à plusieurs vitesses commutables pour un véhicule à moteur, comprenant :
- un arbre d'entrée (10) et un arbre de sortie (30) qui est agencé de manière coaxiale par rapport à l'arbre d'entrée (10),
- un premier arbre intermédiaire (50) et un second arbre intermédiaire (70) qui sont agencés parallèlement à et espacés de l'arbre d'entrée (10),
- une paire de roues dentées côté entraînement avec une roue dentée d'entraînement (11) agencée de manière non rotative sur l'arbre d'entrée (10) et avec une première roue intermédiaire (51) agencée de manière non rotative sur le premier arbre intermédiaire (50),
- une paire de roues dentées côté entraînement avec un second arbre intermédiaire (72) agencé de manière non rotative sur le second arbre intermédiaire (70) et avec une roue de sortie (30) agencée de manière non rotative sur l'arbre de sortie (30), dans laquelle, dans le mode de traction de la boîte de vitesses manuelle
- dans l'état engagé d'au moins un engrenage commutable, un couple d'entraînement est transmis de l'arbre d'entrée (10) à l'arbre de sortie (30) via la paire de roues dentées côté entraînement, pendant qu'aucun couple d'entraînement n'est transmis via la paire de roues dentées côté sortie, et
- dans l'état respectivement engagé d'au moins trois autres vitesses commutable, un couple d'entraînement est transmis de l'arbre d'entrée (10) à l'arbre de sortie (30) via la paire de roues dentées côté sortie, pendant qu'aucun couple d'entraînement n'est transmis via la paire de roues dentées côté entrée, respectivement,
dans laquelle
le premier arbre intermédiaire (50) et le second arbre intermédiaire (70) sont agencés de manière coaxiale, **caractérisée en ce que** le premier arbre intermédiaire (50) est réalisé comme un arbre interne et le second arbre intermédiaire (70) comme un arbre creux.

2. Boîte de vitesses selon la revendication 1, **caractérisée en ce que**, à l'état engagé d'un engrenage de rampement, le couple d'entraînement est transmis via la paire de roues dentées côté entraînement, dans laquelle l'engrenage de rampement représente une vitesse de marche avant au moyen de laquelle le plus grand rapport de transmission peut être créé entre l'arbre d'entrée (10) et l'arbre de sortie (30).

3. Boîte de vitesses selon la revendication 1 ou 2, **caractérisée en ce que**, dans l'état engagé d'une seconde vitesse de marche avant et dans l'état engagé d'au moins une vitesse de marche avant supplémentaire, un couple d'entraînement est transmis via la paire de roues dentées côté sortie.

4. Boîte de vitesses selon l'une quelconque des revendications 1 à 3, **caractérisée en ce que**, lorsqu'une vitesse de marche arrière est engagée, un couple d'entraînement est transmis via la paire de roues dentées côté entraînement.

5. Boîte de vitesses selon l'une quelconque des revendications 1 à 4, **caractérisée en ce que**, dans l'état engagé d'une vitesse de marche avant supplémentaire, le premier arbre intermédiaire (50) est relié de manière non rotative au second arbre intermédiaire (70).

6. Boîte de vitesses selon la revendication 2, **caractérisée en ce que** la première roue intermédiaire (51) est agencée à une extrémité du premier arbre intermédiaire (50) et une roue fixe (52) ou une roue libre de la vitesse de rampement est agencée à une autre extrémité du premier arbre intermédiaire (50).

7. Boîte de vitesses selon la revendication 4, **caractérisée en ce que** la première roue intermédiaire (51) est agencée à une extrémité du premier arbre intermédiaire (50) et une roue fixe (53) ou une roue libre (35) de la vitesse de marche arrière est agencée à une autre extrémité du premier arbre intermédiaire (50).

8. Boîte de vitesses selon l'une quelconque des revendications 1 à 7, **caractérisée en ce que**
sur le second arbre intermédiaire (70) est agencé un premier embrayage à double vitesse (71) au moyen duquel, dans une première position de changement de vitesse, la première roue intermédiaire (51) et, dans une seconde position de changement de vitesse, une roue libre (73) agencée sur le second arbre intermédiaire (70) peut être reliée de manière non rotative au second arbre intermédiaire (70).

9. Boîte de vitesses selon la revendication 7 ou la revendication 8, pour autant que cette dernière se réfère à la revendication 7, **caractérisée en ce qu'**
une plaque intermédiaire est prévue pour supporter l'arbre d'entrée (10) et/ou l'arbre de sortie (30) et le premier arbre intermédiaire (50) et/ou le second arbre intermédiaire (70), dans laquelle la plaque intermédiaire est agencée entre la paire de roues dentées côté sortie et la roue fixe (53) ou la roue libre (35) de la vitesse de marche arrière.

10. Boîte de vitesses selon la revendication 7 ou 9, **caractérisée en ce qu'**
un embrayage de changement de vitesse est prévu pour relier la roue libre (35) de la vitesse de marche arrière à l'arbre sur lequel la roue libre (35) est agencée, dans laquelle la roue libre (35) est agencée dans la direction axiale entre la paire de roues dentées côté sortie et l'embrayage de changement de vitesse.

11. Boîte de vitesses selon la revendication 8 ou la revendication 9, pour autant que cette dernière se réfère à la revendication 8, ou à la revendication 10, pour autant que cette dernière se réfère à la revendication 8, **caractérisée en ce qu'**
un deuxième embrayage à double vitesse (12) est agencé dans la direction axiale entre le premier embrayage à double vitesse (71) et la paire de roues dentées côté sortie afin de relier de manière non rotative à l'arbre d'entrée ou au second arbre intermédiaire des roues libres (16) de vitesses de marche avant supplémentaires, qui sont agencées sur l'arbre d'entrée (10) ou sur le second arbre intermédiaire (70).

12. Boîte de vitesses selon la revendication 11, **caractérisée en ce que** le deuxième embrayage à double vitesse (12) sert à relier une roue dentée (34) d'une vitesse directe à l'arbre d'entrée (10) de manière non rotative, dans laquelle l'arbre d'entrée (10) et l'arbre de sortie (30) tournent à la même vitesse de rotation lorsque la vitesse directe est engagée.

13. Boîte de vitesses selon la revendication 12, **caractérisée en ce qu'**un embrayage de changement de vitesse supplémentaire est prévu dans la direction axiale entre le premier embrayage à double vitesse (71) et le deuxième embrayage à double vitesse (12) afin de relier au moins une roue libre d'au moins une autre vitesse de marche avant, agencée sur l'arbre d'entrée (10) ou le second arbre intermédiaire (70), de manière non rotative, à l'arbre d'entrée (10) ou au second arbre intermédiaire (70).

14. Boîte de vitesses selon la revendication 13, **caractérisée en ce que** l'embrayage de changement de vitesse supplémentaire est réalisé comme un troisième embrayage à double vitesse (17) afin de relier deux roues libres (14, 15) de deux vitesses de marche avant supplémentaires, agencées sur l'arbre d'entrée (10) ou le second arbre intermédiaire (70), de manière non rotative, à l'arbre d'entrée (10) ou au second arbre intermédiaire (70).

15. Boîte de vitesses selon la revendication 13 ou 14, **caractérisée en ce que** le deuxième embrayage à double vitesse (12) et l'embrayage de boîte de vitesses supplémentaire sont chacun agencés sur l'arbre d'entrée (10).
